# EUROPÄISCHE PATENTSCHRIFT

(11) **EP 3 286 266 B1**
(45) Veröffentlichungstag und Bekanntmachung des Hinweises auf die Patenterteilung: **17.02.2021**
(21) Anmeldenummer: 16736769.7
(22) Anmeldetag: 20.04.2016
(51) Int. Cl.: C09D 4/06, C08F 222/14, C09D 135/02

(54) **BESCHICHTUNGSSYSTEME, DEREN VERWENDUNG ZUR BESCHICHTUNG VON BAUTEILEN SOWIE DAMIT BESCHICHTETE BAUTEILE FÜR SCHIENEN- UND LUFTFAHRZEUGE**
COATING SYSTEMS, USE THEREOF FOR COATING COMPONENTS AND COMPONENTS COATED THEREWITH FOR RAIL VEHICLES AND AIRCRAFTS
SYSTÈME DE REVÊTEMENT, SON UTILISATION POUR REVÊTIR DES PIÈCES ET PIÈCES AINSI REVÊTUES POUR DES VÉHICULES FERROVIAIRES ET AÉRIENS

(30) Priorität: 20.04.2015 DE 102015105987
(43) Veröffentlichungstag der Anmeldung: 28.02.2018
(73) Patentinhaber: Mankiewicz Gebr. & Co. GmbH & Co. KG, 21107 Hamburg (DE)
(72) Erfinder: WEHNER, Jochen, 21075 Hamburg (DE); COSTA, Andrea, 21129 Hamburg (DE)
(86) Internationale Anmeldenummer: PCT/DE2016/000164
(87) Internationale Veröffentlichungsnummer: WO 2016/169543

(56) Entgegenhaltungen:
- EP-A1- 0 326 723
- EP-A1- 1 245 590
- EP-A1- 2 374 836
- WO-A1-2013/050574
- WO-A1-2013/050623

## Beschreibung

Die vorliegende Erfindung betrifft verbesserte Beschichtungsstoffe auf der Basis von RMA-Systemen, welche mit Hilfe einer klassischen Michael-Addition vernetzen. Die Erfindung betrifft auch die daraus herstellbaren Beschichtungen und Beschichtungssysteme sowie beschichtete Bauteile, insbesondere Bauteile für Schienen- und Luftfahrzeuge wie z.B. Eisenbahnwaggons oder Flugzeuge.

Beschichtungsstoffe, die in einer Michael-Additionsreaktion vernetzen, sind bekannt. Die daraus hergestellten Beschichtungen weisen hohe Bewitterungsstabilitäten und chemische Beständigkeiten auf. Die schnelle Aushärtung dieser Beschichtungsstoffe wird durch den Einsatz hoher Katalysatorgehalte erreicht, wobei jedoch die Verarbeitungszeit oder Topfzeit des Beschichtungsstoffes stark verkürzt wird.

Eine schnelle Aushärtung ist vor allem bei der Beschichtung oder Lackierung von großen Bauteilen wie zum Beispiel in Flugzeugen oder Eisenbahnwaggons besonders vorteilhaft. Doch allein durch die Größe der Flächen wird zur Beschichtung des gesamten Bauteils relativ viel Zeit benötigt, so dass die eingesetzten Beschichtungsstoffe lange Topfzeiten und lange Offenzeiten aufweisen müssen. Als Topfzeit wird im Folgenden die Zeitspanne zwischen dem Vermischen aller Komponenten eines Beschichtungsstoffs und dem Zeitpunkt, an dem die Vernetzungsreaktion im Beschichtungsstoff soweit fortgeschritten ist, dass der Beschichtungsstoff nicht mehr verarbeitet werden kann, bezeichnet. Als Offenzeit wird im Folgenden die Zeitspanne bezeichnet, in der ein auf eine Oberfläche applizierter Beschichtungsstoff-Film noch ohne Beeinträchtigung der Verlaufseigenschaften korrigiert werden kann.

Während der Applikation des Beschichtungsstoffs müssen die bereits beschichteten Flächen zusätzlich den Overspray, der bei der Lackierung der angrenzenden Flächen entsteht, aufnehmen können, ohne dass es zu Oberflächenstörungen beispielsweise durch einen schlechten Verlauf kommt. Als Overspray wird im Folgenden der beim Spritzlackieren verursachte Materialverlust des Beschichtungsstoffs bezeichnet. Der Materialverlust kann verursacht werden durch Vorbeispritzen aufgrund ungünstiger Orientierung der Spritzpistole zum Werkstück oder bei stark durchbrochenen Werkstücken wie Gittern. Overspray kann auch durch seitlich vor den Werkstückoberflächen abströmende Beschichtungsstoff-Tröpfchen auftreten. Overspray-Aufnahme ist dabei die Eigenschaft eines applizierten Beschichtungsstoffs, Material aus einem Overspray so aufzunehmen, dass die gewünschte glatte Oberfläche des Films oder der Schicht erhalten bleibt.

Nach der Applikation des Beschichtungsstoffs als Film oder Schicht auf einer Substratoberfläche ist eine möglichst schnelle Trocknung oder Aushärtung zur Beschichtung gewünscht. Eine forcierte Trocknung bei erhöhter Temperatur ist bei großen Bauteilen in der Regel nicht möglich, da hierzu entsprechend große Öfen erforderlich wären. Deshalb ist vor allem bei der Beschichtung oder Lackierung von sehr großen Bauteilen eine bei Raumtemperatur schnelle Trocknung besonders wünschenswert.

WO 2013/050623 offenbart eine vernetzbare Zusammensetzung, enthaltend eine Komponente mit mindestens zwei CH-aciden Protonen in aktivierten Methylen- oder Methingruppen, eine Komponente mit mindestens zwei aktivierten ungesättigten Gruppen und ein Katalysatorsystem, das einen basischen Michael-Additionskatalysator enthält oder generieren kann.

Aus EP 2374836 A1 sind in einer Michael-Addition vernetzende Bindemittelsysteme, im Folgenden als RMA-Systeme bezeichnet, bekannt, die ein günstiges Verhältnis von Topfzeit zu Trocknungszeit haben. Die beschriebenen Bindemittelsysteme zeigen bei langen Topfzeiten auch bei Raumtemperatur kurze Trocknungszeiten. Auf EP 2374836 A1 wird hiermit ausdrücklich als Bestandteil der Beschreibung Bezug genommen. Nachteil der bekannten RMA-Systeme ist, dass die daraus hergestellten Beschichtungsstoffe und Beschichtungen nicht die erforderlichen und üblichen Eigenschaften zeigen.

Es ist daher Aufgabe der vorliegenden Erfindung verbesserte Beschichtungsstoffe, Beschichtungen und Beschichtungssysteme auf Basis vom RMA-Systemen zur Verfügung zu stellen, die insbesondere zur Beschichtung von Bauteilen von Luft- und Schienenfahrzeugen geeignet sind.

Diese Aufgabe wird gelöst durch Beschichtungsstoffe zur Herstellung einer Beschichtung gemäß Hauptanspruch. Weitere Ausführungsformen werden in den Neben- und Unteransprüchen sowie der Beschreibung offenbart,

Die erfindungsgemäßen Beschichtungsstoffe umfassen zumindest ein RMA-System, welches ein oder mehrere CH-acide Verbindungen A, ein oder mehrere vinyloge Carbonylverbindungen B und einen oder mehrere latent-basische Katalysatoren C aufweist, sowie ein oder mehrere Lichtschutzmittel, ein oder mehrere Topfzeit-Verlängerer und ein oder mehrere Offenzeit-Verlängerer.

Im Folgenden werden unter dem Begriff Lichtschutzmittel Additive und Hilfsstoffe verstanden, die Beschichtungen gegen den Einfluss von UV-Licht schützen, insbesondere einen durch UV-Strahlung verursachten Polymerabbau verhindern oder zumindest deutlich verzögern. Unter dem Begriff Topfzeit-Verlängerer werden Additive und Hilfsstoffe verstanden, die als Bestandteil des verarbeitungsfertig angemischten Beschichtungsstoffs die Aushärtung des Beschichtungsstoffs vor der Applikation verzögern. Sie verdampfen während der Applikation, so dass die Härtung des applizierten Beschichtungsstoffs nicht beeinträchtigt, insbesondere nicht verlängert, wird. Unter dem Begriff Offenzeit-Verlängerer werden Additive und Hilfsstoffe verstanden, die auch nach der Applikation im Beschichtungsstoff verbleiben und dessen Aushärtung zur Beschichtung verzögern.

Die erfindungsgemäßen Beschichtungsstoffe enthalten zumindest
- 15 bis 70, bevorzugt 20 bis 60, besonders bevorzugt 25 bis 55 Gew.-%, ein oder mehrere CH-acide Verbindungen A, ausgewählt aus Verbindungen der Formel 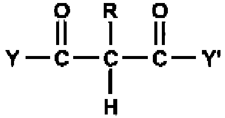 wobei
   - R: Wasserstoff, ein Alkyl- oder Arylrest,
   - Y: ein Alkyl-, Aralkyl-, Aryl-, Alkoxy-Rest oder eine Aminogruppe und,
   - Y': ein Alkyl-, Aralkyl-, Aryl-, Alkoxy-Rest oder eine Aminogruppe ist,
- 4 bis 40, bevorzugt 8 bis 35, besonders bevorzugt 10 bis 30 Gew.-%, ein oder mehrere vinyloge Carbonylverbindungen B aus gewählt aus Acrylaten und Maleaten,
- 0,1 bis 15, bevorzugt 0,2 bis 10, besonders bevorzugt 0,3 bis 5 Gew.-%, ein oder mehrere latent-basische Katalysatoren C,
- 0,00001 bis 10, bevorzugt 0,5 bis 5, besonders bevorzugt 1 bis 3 Gew.-%, ein oder mehrere Lichtschutzmittel, welche ausgewählt sind aus der Gruppe enthaltend Radikalfänger, UV-Absorber, Quencher und Peroxidzersetzer,
- 0,00001 bis 20, bevorzugt 0,01 bis 10, besonders bevorzugt 0,1 bis 5 Gew.-%, ein oder mehrere Offenzeit-Verlängerer, welche ausgewählt sind aus der Gruppe enthaltend basische NH-funktionelle Verbindungen mit pKₐ-Werten zwischen 4 und 14, und,
- 0,00001 bis 20, bevorzugt 0,01 bis 15, besonders bevorzugt 0,1 bis 10 Gew.-%, ein oder mehrere Topfzeit-Verlängerer, welche ausgewählt sind aus der Gruppe enthaltend Alkohole mit bis zu 6 Kohlenstoffatomen und Verdunstungszahlen unter 35,
jeweils bezogen auf die Gesamtmenge des Beschichtungsstoffs.

Weiterhin können die erfindungsgemäßen Beschichtunsstoffe
- 0 bis 70, bevorzugt 0,00001 bis 65, besonders bevorzugt 0,00001 bis 40 Gew.-%, Pigmente,
- 0 bis 25, bevorzugt 0,00001 bis 8, besonders bevorzugt 0,00001 bis 5 Gew.-%, Dispergieradditive,
- 0 bis 60, bevorzugt 0,00001 bis 40, besonders bevorzugt 0,00001 bis 30 Gew.-%, funktionale Füllstoffe und
- 0 bis 50, bevorzugt 0,00001 bis 40, besonders bevorzugt 0,00001 bis 30 Gew.-%, aprotische Lösemittel enthalten,
wobei sich die Mengenangaben jeweils auf die Gesamtmenge des Beschichtungsstoffs beziehen.

Erfindungsgemäß werden die Verbindungen A und B in einem Stoffmengenverhältnis A:B von 0,5:1 bis 2:1, bevorzugt von 0,75:1 bis 1,6:1, besonders bevorzugt von 0,9:1 bis 1,3:1, ganz besonders bevorzugt von 0,95:1 bis 1,1:1 eingesetzt, wobei die Stoffmengen auf die aciden Protonen der Verbindungen A und auf die vinylogen Carbonylgruppen der Verbindungen B bezogen sind,

Erfindungsgemäß werden die Katalysatoren C und Verbindungen A in einem Stoffmengenverhältnis C:A von 0,8:1 bis 2,5:1, bevorzugt 1,1:1 bis 1,9:1, besonders bevorzugt 1,3:1 bis 1,7:1 eingesetzt, wobei die Stoffmengen auf das Kation X⁺ des Katalysators C und die aciden Protonen der Verbindungen A bezogen sind.

Erfindungsgemäß geeignete CH-acide Verbindungen A sind Malonsäureester, Acetessigsäureester oder deren Gemische eingesetzt. Besonders bevorzugt sind Malonsäureester mit oligomeren und polymeren Substituenten beispielsweise auf der Basis von Polyestern, Polyurethanen, Polyacrylaten, Epoxidharzen, Polyamiden oder Polycarbonaten. Besonders bevorzugt sind Malonsäureester mit oligomeren und polymeren Substituenten auf Basis von Polyestern, Polyurethanen und/oder Polycarbonaten. Die eingesetzten Acetessigsäureester enthalten bevorzugt oligomere und polymere Substituenten beispielsweise auf der Basis von Polyalkoholen, Polyvinylalkoholen, Epoxidharzen, hydroxyfunktionellen Polyethern, Polyestern oder Polyacrylaten. Besonders bevorzugt sind Acetessigsäureester mit oligomeren und polymeren Substituenten auf Basis von Polyestern und/oder Polyacrylaten. Ganz besonders bevorzugt sind Verbindungen ausgewählt aus der Gruppe enthaltend Malonsäureester mit oligomeren und polymeren Substituenten auf der Basis von Polyestern, die aus der Umsetzung von zumindest Malonsäure, Malonsäuredimethylester und/oder Malonsäurediethylester mit Hexahydrophthalsäure und/oder deren Anhydrid und Neopentylglycol erhalten werden, sowie Acetessigsäureester mit oligomeren und polymeren Substituenten auf der Basis Polyestern, die aus der Umsetzung von zumindest Acetessigsäure, Acetessigsäuremethylester und/oder Acetessigsäureethylester mit Hexahydrophthalsäure und/oder deren Anhydrid und Neopentylglycol erhalten werden.

Erfindungsgemäß geeignete vinyloge Carbonylverbindungen B sind beispielsweise ungesättigte acryloyl-funktionale Acrylate und/oder Maleate. Erfindungsgemäß bevorzugt sind Acrylester aus Verbindungen enthaltend 1 bis 20 Kohlenstoffatome und zumindest 2, bevorzugt 2 bis 6, Hydroxylgruppen. Erfindungsgemäß bevorzugt sind weiterhin Polyester aus Maleinsäure, Fumarsäure und/oder Itaconsäure oder deren Anhydride umgesetzt mit di- oder polyvalenten Hydroxylverbindungen, die eine monovalente Hydroxyl- oder Carboxylverbindung enthalten können. Weiterhin bevorzugt sind Harze wie Polyester, Polyurethane, Polyether und/oder Alkydharze, welche entsprechend aktivierte ungesättigte Gruppen enthalten wie beispielsweise Urethanacrylate, Polyetheracrylate, polyfunktionelle Polyacrylate, Polyalkylmaleate und Polyacrylate, die aus der Umsetzung von Acrylsäure mit Epoxidharzen erhalten werden. Erfindungsgemäß besonders bevorzugt sind Butandioldiacrylat, Hexandioldiacrylat, Trimethylolpropantriacrylat, Pentaerythritoltetraacrylat und Ditrimethylolpropantetraacrylat und Dipentaerithritol-hexa-acrylat sowie Dipropylenglykoldiacrylat und Tripropylenglykoldiacrylat.

Geeignete latent-basische Verbindungen für die Katalysatoren C sind beispielsweise substituierte Carbonsäuresalze der Formel II: 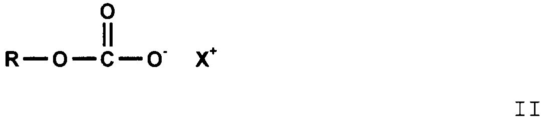 worin
- R: Wasserstoff, Alkyl- oder Aralkyl- (Ar-R) oder ein Polymer ist,
- X⁺: ein Alkali- oder Erdalkalimetall-Kation, insbesondere Lithium, Natrium oder Kalium ist, oder ein quaternäres Ammonium- oder Phosphoniumsalz der Formel (R')₄Y⁺ ist, worin Y
Y Stickstoff oder Phosphor ist,
R' gleich oder verschieden, Wasserstoff, Alkyl-, Aral- oder Aralkyl- oder ein Polymer ist und worin
R und R' eine Ringstruktur bilden können oder
R und R' ein Polymer sein können.

Erfindungsgemäß bevorzugt ist R eine Alkylgruppe oder eine Aralkylgruppe, besonders bevorzugt eine Alkylgruppe mit 1 bis 4 Kohlenstoffatomen. Die Carbonatgruppe und das Kation X⁺ können darüber hinaus auch an einem Molekül mit der entsprechenden Struktur vorhanden sein. Weiterhin bevorzugt ist R' eine Alkylgruppe, besonders bevorzugt eine Alkylgruppe mit 1 bis 4 Kohlenstoffatomen, besonders bevorzugt mit 3 bis 4 Kohlenstoffatomen. Erfindungsgemäß bevorzugt werden Ammonium- und/oder Phosphoniumcarbonate eingesetzt. Geeignete Ammoniumcarbonate sind beispielsweise Tetrahexylammoniummethylcarbonat, Tetrahexylammoniumhydrogencarbonat, Tetradecanyltrihexylammoniummethylcarbonat, Tetradecylammoniummethylcarbonat, Tetrabutylammoniummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat, Benzyltrimethylammoniummethylcarbonat, Trihexylmethylammoniummethylcarbonat oder Trioctylmethylammoniummethylcarbonat. Besonders bevorzugt werden Tetrabutylammoniummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat und deren Gemische eingesetzt.

Geeignete Lichtschutzmittel sind Radikalfänger wie sterisch gehinderte aliphatische Amine z.B. auf Basis substituierter 2,2,6,6-Tetramethylpiperidine, UV-Absorber wie 2-Hydroxyphenylbenztriazole, 2-Hydroxybenzophenone, 2-Hydroxyphenyltriazine oder Oxalanilide, sowie Quencher wie organische Nickelverbindungen und Peroxidzersetzer wie Thioether oder Phosphite. Bevorzugt eingesetzt werden Radikalfänger beispielsweise sterisch gehinderte aliphatische Amine auf Basis substituierter 2,2,6,6-Tetramethylpiperidine, und/oder UV-Absorber beispielsweise 2-Hydroxyphenylbenztriazole, 2-Hydroxybenzophenone, 2-Hydroxyphenyltriazine und Oxalanilide. Besonders bevorzugt eingesetzt werden substituierte 2,2,6,6-Tetramethylpiperidine, 2-Hydroxyphenyltriazine, 2-Hydroxybenzophenone und deren Gemische.

Geeignete Topfzeit-Verlängerer sind Alkohole mit bis zu 6, bevorzugt bis zu 4, besonders bevorzugt bis zu 3 Kohlenstoffatomen, die eine Verdunstungszahl unter 35, bevorzugt unter 20 aufweisen. So können erfindungsgemäß beispielsweise Methanol, Ethanol, n-Propanol, i-Propanol, n-Butanol, i-Butanol und deren Gemische eingesetzt werden.

Geeignete Offenzeit-Verlängerer sind basische NH-funktionelle Verbindungen mit einem pKₐ-Wert zwischen 4 und 14. Bevorzugt sind Succinimide, 1,2,4,-Triazole, 1,2,3,-Benzotriazole, 5,5-Diphenylhydantoine, Hydantoine, (RS)-3-Ethyl-3-methylpyrrolidin-2,5-dion und deren Gemische. Besonders bevorzugt sind Succinimide, 1,2,4,-Triazole, 1,2,3,-Benzotriazole und deren Gemischen.

In einer weiteren Ausführungsform der vorliegenden Erfindung können den Beschichtungsstoffen zur Herstellung einer farbgebenden Beschichtung anorganische und/oder organische Pigmente zugesetzt werden. Auch weitere Additive wie Dispergieradditive und funktionale Füllstoffe können zugesetzt werden, um die erforderlichen Eigenschaften des Beschichtungsstoffes und/oder der Beschichtung zu verbessern.

Anorganische und/oder organische Pigmente können den erfindungsgemäßen Beschichtungsstoffen in Mengen bis zu 70, bevorzugt 0,00001 bis 65, besonders bevorzugt 0,00001 bis 40 Gew.-% zugegeben werden, wobei sich die Mengenangaben jeweils auf die Gesamtmenge des Beschichtungsstoffs beziehen. Geeignete anorganische Pigmente sind beispielsweise Titandioxid, Eisenoxide, Chromoxide, Chromtitanate, Bismutvanadat, Cobaltblau und Ruße. Bevorzugt eingesetzte anorganische Pigmente sind Titandioxid, Eisenoxide und Ruße. Geeignete organische Pigmente sind beispielsweise Pigment Yellow 151, Pigment Yellow 213, Pigment Yellow 83, Pigment Orange 67, Pigment Orange 62, Pigment Orange 36, Pigment Red 170, Pigment Violet 19, Pigment Violet 23, Pigment Blue 15:3, Pigment Blue 15:6, Pigment Green 7. Bevorzugt eingesetzte Pigmente sind Pigment Yellow 151, Pigment Orange 67, Pigment Red 170, Pigment Violet 19, Pigment Blue 15:3, Pigment Green 7.

In einer weiteren Ausführungsform können die Beschichtungsstoffe zusätzlich bis zu 25, bevorzugt 0,00001 bis 8, besonders bevorzugt 0,00001 bis 5 Gew.-% Dispergieradditive enthalten, wobei sich die Mengenangaben jeweils auf die Gesamtmenge des Beschichtungsstoffes beziehen. Geeignete Dispergieradditive sind beispielsweise hochmolekulare Blockcopolymere mit pigmentaffinen Gruppen, hochverzweigte Polyester, Acrylat-Polyester-Copolymere mit pigmentaffinen Gruppen. Bevorzugt eingesetzte Dispergieradditive sind hochmolekulare Blockcopolymere mit pigmentaffinen Gruppen.

In einer weiteren Ausführungsform können die Beschichtungsstoffe zusätzlich bis zu 60, bevorzugt 0,00001 bis 50, besonders bevorzugt 0,00001 bis 40 Gew.-% funktionale Füllstoffe enthalten, wobei sich die Mengenangaben jeweils auf die Gesamtmenge des Beschichtungsstoffs beziehen. Geeignete Füllstoffe sind beispielsweise Carbonate wie Kreide, Kalksteinmehl, Calcit, gefälltes Calciumcarbonat, Dolomit, Bariumcarbonat, Sulfate wie Baryt, Blanc fixe, Calciumsulfat, Silikate wie Talk, Pyrophyllit, Chlorit, Hornblende, Glimmer, Kaolin, Wollastonit, Schiefermehl, gefällte Calciumsilikate, gefällte Aluminiumsilikate, gefällte Calcium-Aluminiumsilikate, gefällte Natrium-Aluminiumsilikate, Feldspäte, Mullit, Kieselsäuren wie Quarz, Quarzgut, Cristobalit, Kieselgur, Kieselerde, gefällte Kieselsäure, Bimsmehl, Perlit, Calcium-Metasilikate, Fasern aus Schmelzen von Glas oder Basalten, Glasmehl, Glaskugeln und Schlacken. Bevorzugt eingesetzte Füllstoffe sind Bariumsulfat und/oder Talkum.

In weiteren erfindungsgemäßen Ausführungsformen enthalten die Beschichtungsstoffe darüber hinaus bis zu 50, bevorzugt 0,00001 bis 40, besonders bevorzugt 0,00001 bis 30 Gew.-% aprotische Lösemittel, wobei sich die Mengenangaben jeweils auf die Gesamtmenge des Beschichtungsstoffes beziehen. Unter dem Begriff aprotische Lösemittel werden im Folgenden Lösemittel verstanden, die kein ionisierbares Proton im Molekül enthalten. Geeignete aprotische Lösemittel sind beispielsweise aliphatische Kohlenwasserstoffe, cycloaliphatische Kohlenwasserstoffe, aromatische Kohlenwasserstoffe, Ketone, Ester, Ether, Etherester insbesondere Ethylacetat, Butylacetat, Aceton, n-Butanon, Methylisobutylketon, Methoxypropylacetat sowie Dimethylsulfoxid. Bevorzugt eingesetzte Lösungsmittel sind Ethylacetat, Butylacetat, Aceton, n-Butanon, Methylisobutylketon, Methoxypropylacetat und deren Gemische.

Die als erfindungsgemäße Katalysatoren C eingesetzten Verbindungen sind latente Base, da das Carbonatsalz gemäß Formel II im Gleichgewicht mit seinen Dissoziationsprodukten Kohlendioxid und der entsprechenden Hydroxid- oder Alkoxy-Base steht. Solange Kohlendioxid aus dem System nicht entweichen kann, liegt das Gleichgewicht auf der Seite des Carbonatsalzes. Erst wenn Kohlendioxid entfernt wird und somit eine hinreichende Menge an Base vorliegt, startet die Vernetzung mittels Michael-Addition. Bei einer Lagerung der erfindungsgemäßen Beschichtungsstoffe in geschlossen Behältern, aus denen Kohlendioxid nicht entweichen kann, kann der Beschichtungsstoff grundsätzlich als ein Einkomponentensystem formuliert werden. Die Lagerstabilität kann jedoch erhöht werden, wenn die einzelnen Bestandteile des erfindungsgemäßen Beschichtungsstoffs in Mehrkomponentensystemen formuliert werden. So kann beispielsweise eine Katalysatorkomponente, welche die Katalysatoren C enthält, erst kurz vor der Verarbeitung mit den Bindemittelkomponenten, welche die CH-aciden Verbindungen A und die vinylogen Carbonylverbindungen B enthalten, vermischt werden.

Erfindungsgemäß können die CH-acide Verbindungen A und die vinylogen Carbonylverbindungen B zusammen mit den eingesetzten Lichtschutzmitteln, Offenzeit-Verlängerern und Topfzeit-Verlängerern in einer Bindemittelkomponente enthalten sein. Diese Bindemittelkomponente kann weiterhin Pigmente, zusätzliche weitere Additive sowie Lösemittel enthalten. Die Katalysatoren C sowie gegebenenfalls weitere Lösemittel und Topfzeit-Verlängerer können in einer Katalysatorkomponente enthalten sein. In einer bevorzugten Ausführungsform können die CH-acide Verbindungen A in einer ersten Bindemittelkomponente, die vinylogen Carbonylverbindungen B in einer zweiten Bindemittelkomponente und die Katalysatoren C in einer Katalysatorkomponente vorliegen. In einem solchen Dreikomponenten-System sind bevorzugt die CH-aciden Verbindungen A zusammen mit den Offenzeit-Verlängerern und Lichtschutzmitteln in der ersten Bindemittelkomponente enthalten. Gegebenenfalls kann diese erste Bindemittelkomponente weiterhin Pigmente und Füllstoffe sowie zusätzliche Additive enthalten. In der zweiten Bindemittelkomponente sind bevorzugt die vinylogen Carbonylverbindungen B enthalten. Weiterhin kann auch die zweite Bindemittelkomponente Pigmente, Füllstoffe und zusätzliche Additive enthalten. In der Katalysatorkomponente sind die Katalysatoren C enthalten. Weiterhin kann die Katalysatorkomponente Lösemittel und Topfzeit-Verlängerer enthalten.

Es ist bekannt, dass die Zugabe weiterer Bestandteile, die zur Herstellung einer Beschichtung üblich sind, die Lagerstabilität der RMA-Systeme verringert. Die erfindungsgemäßen Beschichtungsstoffe mit ihrer besonderen Auswahl an Lichtschutzmitteln, Offenzeit-Verlängern, Topfzeit-Verlängern, Pigmenten, Dispergieradditiven, funktionalen Füllstoffen und aprotischen Lösemitteln weisen im Vergleich zu bisher bekannten Beschichtungsstoffen auf Basis von RMA-Systemen eine unerwartete hohe Lagerstabilität auf.

Weiterhin werden auch die Eigenschaften von Beschichtungen, welche aus Beschichtungsstoffen auf Basis von RMA-Systemen hergestellt sind, im Unterschied zu Beschichtungen, welche aus Beschichtungstoffen auf Basis üblicher Bindemitteln wie beispielsweise Epoxidharzen oder Polyurethanen hergestellt sind, stark vom Vorhandensein weiterer Bestandteile des Beschichtungstoffs negativ beeinflusst. Es hat sich überraschenderweise gezeigt, dass die erfindungsgmäßen Beschichtungsstoffe Beschichtungen ergeben, welche die für eine Verwendung bei Bauteilen von Schienen- und Luftfahrzeugen erforderlichen Eigenschaften, insbesondere Glanzhaltung, mechanische Stabilität und Lichtstabilität, aufweisen.

In einer besonders bevorzugten Ausführungsform umfassen die erfindungsgemäßen Beschichtungsstoffe zumindest
- 15 bis 70, bevorzugt 20 bis 60, besonders bevorzugt 25 bis 55 Gew.-% Malonsäureester mit oligomeren und Polymeren Substituenten auf der Basis von Polyestern, die aus der Umsetzung von zumindest Malonsäure, Malonsäuredimethylester und/oder Malonsäurediethylester mit Hexahydrophthalsäure und/oder deren Anhydrid und Neopentylglycol erhalten werden, sowie Acetessigsäureester mit oligomeren und polymeren Substituenten auf der Basis Polyestern, die aus der Umsetzung von zumindest Acetessigsäure, Acetessigsäuremethylester und/oder Acetessigsäureethylester mit Hexahydrophthalsäure und/oder deren Anhydrid und Neopentylglycol erhalten werden, als CH-acide Verbindungen A
- 4 bis 40, bevorzugt 8 bis 35, besonders bevorzugt 10 bis 30 Gew.-% Butandioldiacrylat, Hexandioldiacrylat, Trimethylolpropantriacrylat, Pentaerythritoltetraacrylat, Ditrimethylolpropantetraacrylat und/oder Dipentaerithritolhexaacrylat als vinyloge Carbonylverbindungen B,
- 0,1 bis 15, bevorzugt 0,2 bis 10, besonders bevorzugt 0,3 bis 5 Gew.-% Tetrabutylammoniummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat oder deren Gemische als latent-basische Katalysatoren C,
- 0,00001 bis 10, bevorzugt 0,5 bis 5, besonders bevorzugt 1 bis 3 Gew.-% substituierte 2,2,6,6-Tetramethylpiperidine, 2-Hydroxyphenyltriazine, 2-Hydroxybenzophenone oder deren Gemische als Lichtschutzmittel,
- 0,00001 bis 20, bevorzugt 0,01 bis 10, besonders bevorzugt 0,1 bis 5 Gew.-% Succinimide, 1,2,4,-Triazole, 1,2,3,-Benzotriazole oder deren Gemische als Offenzeit-Verlängerer,
- 0,00001 bis 20, bevorzugt 0,01 bis 15, besonders bevorzugt 0,1 bis 10 Gew.-% Methanol, Ethanol, n-Propanol, i-Propanol, n-Butanol, i-Butanol oder deren Gemische als Topfzeit-Verlängerer,
- 0 bis 50, bevorzugt 0,00001 bis 40, besonders bevorzugt 0,00001 bis 30 Gew.-% Ethylacetat, Butylacetat, Aceton, n-Butanon, Methylisobutylketon, Methoxypropylacetat oder deren Gemische als aprotische Lösemittel,
wobei sich die Mengenangaben jeweils auf die Gesamtmenge des Beschichtungsstoffes beziehen.

In einer weiteren besonders bevorzugten Ausführungsform weisen die erfindungsgemäßen Beschichtungsstoffe zumindest
- 15 bis 70, bevorzugt 20 bis 60, besonders bevorzugt 20 bis 55 Gew.-% Malonsäureester mit oligomeren und polymeren Substituenten auf der Basis von Polyestern, die aus der Umsetzung von zumindest Malonsäure, Malonsäuredimethylester und/oder Malonsäurediethylester mit Hexahydrophthalsäure und/oder deren Anhydrid und Neopentylglycol erhalten werden, sowie Acetessigsäureester mit oligomeren und polymeren Substituenten auf der Basis Polyestern, die aus der Umsetzung von zumindest Acetessigsäure, Acetessigsäuremethylester und/oder Acetessigsäureethylester mit Hexahydrophthalsäure und/oder deren Anhydrid und Neopentylglycol erhalten werden, als CH-acide Verbindungen A,
- 4 bis 40, bevorzugt 8 bis 35, besonders bevorzugt 10 bis 30 Gew.-% Butandioldiacrylat, Hexandioldiacrylat, Trimethylolpropantriacrylat, Pentaerythritoltetraacrylat, Ditrimethylolpropantetraacrylat und/oder Dipentaerithritolhexaacrylat als vinyloge Carbonylverbindungen B,
- 0,1 bis 15, bevorzugt 0,2 bis 10, besonders bevorzugt 0,3 bis 5 Gew.-% Tetrabutylammoniummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat oder deren Gemische als vinyloge Carbonylverbindungen B,
- 0,00001 bis 10, bevorzugt 0,5 bis 5, besonders bevorzugt 1 bis 3 Gew.-% substituierte 2,2,6,6-Tetramethylpiperidine, 2-Hydroxyphenyltriazine, 2-Hydroxybenzophenone oder deren Gemische als Lichtschutzmittel,
- 0,00001 bis 20, bevorzugt 0,01 bis 10, besonders bevorzugt 0,1 bis 5 Gew.-% Succinimide, 1,2,4,-Triazole, 1,2,3,-Benzotriazole oder deren Gemische als Offenzeit-Verlängerer,
- 0,00001 bis 20, bevorzugt 0,01 bis 15, besonders bevorzugt 0,1 bis 10 Gew.-% Methanol, Ethanol, n-Propanol, i-Propanol, n-Butanol, i-Butanol oder deren Gemische als Topfzeit-Verlängerer,
- 0 bis 70, bevorzugt 0,00001 bis 65, besonders bevorzugt 0,00001 bis 40 Gew.-% Titandioxid, Eisenoxide, Ruße, Pigment Yellow 151, Pigment Orange 67, Pigment Red 170, Pigment Violet 19, Pigment Blue 15:3, Pigment Green 7 oder deren Gemische als Pigmente,
- 0 bis 25, bevorzugt 0,00001 bis 8, besonders bevorzugt 0,00001 bis 5 Gew.-% hochmolekulare Blockcopolymere mit pigmentaffinen Gruppen als Dispergieradditive,
- 0 bis 60, bevorzugt 0,00001 bis 40, besonders bevorzugt 0,00001 bis 30 Gew.-% Bariumsulfat und/oder Talkum als funktionale Füllstoffe und
- 0 bis 50, bevorzugt 0,00001 bis 40, besonders bevorzugt 0,00001 bis 30 Gew,-% Ethylacetat, Butylacetat, Aceton, n-Butanon, Methylisobutylketon, Methoxypropylacetat oder deren Gemische als aprotische Lösemittel,
wobei sich die Mengenangaben jeweils auf die Gesamtmenge des Beschichtungsstoffes beziehen.

Die erfindungsgemäßen Beschichtungsstoffe können zur Herstellung von Beschichtungssystemen verwendet werden, welche einen Aufbau aus zwei oder mehr Beschichtungen aufweisen. Die erfindungsgemäßen Beschichtungsstoffe können dabei zur Herstellung zumindest einer Schicht oder Beschichtung eingesetzt werden. In einer bevorzugten Ausführungsform werden die Beschichtungsstoffe zur Herstellung eines Zweischichtaufbaus eingesetzt, besonders bevorzugt werden sie zum Aufbau eines Basislack-Klarlack-Systems eingesetzt. Als Klarlacke werden im Folgenden Beschichtungsstoffe und Beschichtungen bezeichnet, welche keine Farbmittel enthalten. Als Basislacke werden im Folgenden Beschichtungsstoffe und Beschichtungen bezeichnet, welche Farbmittel wie beispielsweise Farbstoffe oder Pigmente enthalten. Basislack-Klarlack-Systeme werden häufig auch bei Luft- und Schienenfahrzeugen eingesetzt, da sie sehr witterungsbeständig sind, vor allem in Bezug auf den Glanzerhalt.

Die erfindungsgemäßen Beschichtungsstoffe und Beschichtungen weisen gegenüber den bisher bekannten RMA-Beschichtungsstoffen und -Beschichtungen überraschenderweise eine deutlich höhere Lagerstabilität auf. Auch zeigen sie ein verbessertes Trockungsverhalten. Die aus den erfindungsgemäßen Beschichtungsstoffen erhaltenen Beschichtungen weisen darüber hinaus eine verbesserte Lichtstabilität auf, insbesondere weniger Vergilbung und höhere Glanzhaltung.

Die erfindungsgemäßen Beschichtungsstoffe weisen Topfzeiten größer gleich 1 Stunde, bevorzugt größer gleich 2 Stunden, besonders bevorzugt zwischen 2 und 4 Stunden auf. Üblicherweise wird die Topfzeit über die Auslaufzeit aus einem Auslaufbecher bestimmt. Das Ende der Topfzeit ist festgelegt, als der Zeitpunkt in dem die Auslaufzeit den doppelten Wert der Start-Auslaufzeit zeigt. Die Prüfmethode wird unten in den Beispielen ausführlich beschrieben. Weiterhin zeigen die erfindungsgemäßen Beschichtungsstoffe Offenzeiten von größer gleich 15 Minuten, bevorzugt größer 20 Minuten, besonders bevorzugt größer gleich 25 Minuten. Neben den langen Topf- und Offenzeiten zeigen die erfindungsgemäßen Beschichtungsstoffe überraschenderweise ein ungewöhnlich breites Klimafenster, in dem sie ohne Beeinträchtigung verarbeitet werden können. Sie sind beispielsweise bei Temperaturen bis zu 45 C und bei relativer Luftfeuchte bis zu 99 % verarbeitbar. Darüber hinaus zeigen sie eine lange Overspray-Aufnahme, beispielsweise über einen Zeitraum von mehr als 25 Minuten.

Im Unterschied zu üblicherweise eingesetzten Beschichtungsstoffen auf Polyurethan-Basis weisen die erfindungsgemäßen Beschichtungsstoffe deutlich verkürzte Trocknungszeiten auf. Darüber hinaus sind die erfindungsgemäßen Beschichtungen schneller abklebbar, d.h. sie sind bei Raumtemperatur bereits 1 bis 4 Stunden nach der Applikation so weit ausgehärtet, dass z.B. Musterschablonen aufgeklebt werden können, die nach der Auflackierung des Musters ohne Beschädigung der Beschichtung wieder entfernt werden können. Aufgeklebte Schablonen werden üblicherweise zur Anbringung farblicher Dekore und Muster auf einer Beschichtung eingesetzt.

Mit ihren Eigenschaften sind die erfindungsgemäßen Beschichtungsstoffe vor allem für eine Verwendung zur Beschichtung großer Bauteile geeignet. Sie sind insbesondere zur Beschichtung großflächiger Bauteile geeignet wie sie beispielsweise im Waggon- und Flugzeugbau verwendet werden.

Die vorliegenden Erfindung betrifft auch Verfahren zur Beschichtung von Bauteilen. Die erfindungsgemäßen Verfahren umfassen dabei die Schritte (a) Applizieren des erfindungsgemäßen Beschichtungsstoffs auf der Oberfläche eines Substrats und (b) Aushärten des applizierten Beschichtungsstoffes für 1 bis 12, bevorzugt 1 bis 6, besonders bevorzugt 1 bis 4 Stunden bei Temperaturen zwischen 5 bis 45, bevorzugt 15 bis 40, besonders bevorzugt 20 bis 35 °C.

Die erfindungsgemäßen Beschichtungsstoffe weisen überdurchschnittlich hohe Festkörpergehalte auf und enthalten dementsprechend geringe Anteile an leichtflüchten organischen Substanzen wie beispielsweise Lösemitteln. Der Festkörpergehalt ist definiert als der Massenanteil eines Beschichtungsstoffs, der beim Eindampfen bei 105 °C nach 30 Minuten als Rückstand verbleibt. Im Wesentlichen besteht der Festkörper in der Regel aus Bindemittel, nicht flüchtigen Additiven, Pigmenten und Füllstoffen. Die Festkörpergehalte der erfindungsgemäßen Beschichtungsstoffe liegen zwischen 65 und 95, bevorzugt 70 und 90, besonders bevorzugt zwischen 75 und 85 Gew.-%, bezogen auf das Gesamtgewicht des Beschichtungsstoffs.

Üblicherweise sind Beschichtungsstoffe mit hohen Festkörpergehalten mit den üblichen Spritzverfahren schlecht verarbeitbar. Im Unterschied dazu können die erfindungsgemäßen Beschichtungsstoffe ohne Weiteres mit Hilfe von hydraulischem Höchstdruckspritzen (Airless), Airless-Spritzen mit Luftunterstützung (Airmix) sowie mit Hilfe von pneumatischen Spritzen oder Druckluftspritzen appliziert werden. Auch bei diesen Applikationsverfahren werden hier überraschenderweise Oberflächen hoher Güte erhalten. Erfindungsgemäß besonders geeignet sind elektrostatisch unterstützte Airspray- oder Airmixverfahren.

Geeignete Substrate sind Metalle wie beispielsweise Aluminium, Aluminiumlegierungen, Stähle und Eisenlegierungen, Kunststoffe sowie glas- und kohlefaserverstärkte Faserverbundwerkstoffe. Die zu beschichtenden Bauteiloberflächen können mit einer Grundierung versehen sein wie beispielsweise die üblichen, dem Fachmann bekannten Grundierungen auf Basis von Epoxid-Harzen oder Polyurethanen.

Bei erfindungsgemäßen Beschichtungsstoffen, welche mehrere Komponenten aufweisen, werden alle Komponenten vor der Applikation vermischt. Die Mischung kann dabei manuell oder maschinell erfolgen. In einer weiteren Ausführungsform kann ein Beschichtungssystem mit zumindest einer zusätzlichen Beschichtung hergestellt werden, indem auf der ersten Beschichtung weitere Beschichtungsstoffe appliziert und ausgehärtet werden.

In einer bevorzugten Ausführungsform des erfindungsgemäßen Verfahrens wird ein Beschichtungssystem in einem Zweischichtaufbau hergestellt. Zunächst wird ein Basislack appliziert und ausgehärtet, auf diese Beschichtung wird dann ein Klarlack aufgebracht und ausgehärtet. Dabei können Basislack oder Klarlack oder auch Basis- und Klarlack aus den erfindungsgemäßen Beschichtungsstoffen hergestellt werden.

Die erfindungsgemäßen Beschichtungen weisen eine Trockenschichtdicke von 20 bis 150 µm auf. Geringe Trockenschichtdicken mit dennoch hoher Deckkraft sind insbesondere bei Beschichtung von Bauteilen für die Luftfahrt geeignet, da so Gewicht eingespart werden kann.

Da die erfindungsgemäßen Beschichtungsstoffe bei Raumtemperatur ausgehärtet werden können, sind sie vor allem zur Beschichtung von großen Bauteilen, wie sie beispielsweise zum Bau von Flugzeugen und Eisenbahnwagons verwendet werden, geeignet. Sie sind insbesondere zur Beschichtung von Rumpfteilen, Flügeln, Radomen, Seitenleitwerken, Höhenleitwerken, Triebwerksverkleidungen, Winglets und Landeklappen sowie für Triebköpfe, Waggonteile, Dächer, Türen und Fahrwerksverkleidungen geeignet. Sie sind auch geeignet zur Beschichtung von Interieurbauteilen von Schienen- und Luftfahrzeugen wie beispielsweise Deckenpanelen, Wandverkleidungen, Fußbodenpanelen, Hatrack-Klappen und Türen.

### Beispiele

Die Herstellung der Beschichtungsstoffe erfolgt nach den lacktechnischen Standards, welche dem Fachmann bekannt und geläufig sind. Die in den Beispielrezepturen 1 und 2 eingesetzte Katalysatorlösung wird hergestellt indem zu einer Lösung von 17,1 g Tetrabutylammoniumhydroxid in 14 g Wasser 42,8 g Diethylcarbonat und 26,1 g i-Propanol gegeben werden.

**Beispielrezeptur 1: Klarlack**

| **Substanz** | **Menge [Gew.-%]** |
|---|---|
| **Bindemittelkomponente** | |
| malonatfunktioneller Polyester mit einer Konzentration an aciden Protonen von 5,66 mol/kg bezogen auf den lösemittelfreien Polyester, 85%ig in Butylacetat | 52 |
| Di-trimethylolpropantetraacrylat | 23 |
| Hexandioldiacrylat | 5,5 |
| Bis(1,2,2,6,6-pentamethyl-4-piperidinyl)-sebacat | 3 |
| Succinimid | 1,5 |
| Methylethylketon | 6 |

| **Katalysatorkomponente** | |
|---|---|
| Katalysatorlösung | 6 |
| Isopropanol | 3 |

**Beispielrezeptur 2: Basislack**

| **Substanz** | **Menge [Gew.-%]** |
|---|---|
| **Bindemittelkomponente 1** | |
| malonatfunktioneller Polyester mit einer Konzentration an aciden Protonen von 5,66 mol/kg bezogen auf den lösemittelfreien Polyester, 85%ig in Butylacetat | 31 |
| Titandioxid | 35 |
| hochmolekulares Blockcopolymer mit pigmentaffinen Gruppen | 1 |
| Bis(1,2,2,6,6-pentamethyl-4-piperidinyl)-sebacat | 1 |
| Succinimid | 1 |
| Butylacetat | 4, 5 |

| **Bindemittelkomponente 2** | |
|---|---|
| Ditrimethylolpropantetraacrylat | 14 |
| Hexandioldiacrylat | 3 |

| **Katalysatorkomponente** | |
|---|---|
| Katalysatorlösung | 3, 5 |
| Isopropanol | 2 |
| Methylethylketon | 4 |

Für eine Beurteilung der Lagerstabilität der erfindungsgemäßen Beschichtungsstoffe wurden Topfzeit und Trockungszeit der Beispielrezeptur 2 bestimmt. Dabei wurden jeweils Proben nach 1 Tag Lagerung bei 23 °C, nach 28 Tage Lagerung bei 40 °C und nach 1 Jahr Lagerung bei 20 bis 23 °C geprüft bzw. zur Herstellung einer Beschichtung eingesetzt.

Bestimmung der Topfzeit: Die Topfzeit wird mit Hilfe eines Auslaufbechers bestimmt. Bei diesem Verfahren wird eine Flüssigkeit in einen Becher mit definiertem Volumen gefüllt, der in seinem Boden eine definierte Düse aufweist. Der Beschichtungsstoff läuft durch die Düse aus, wobei die Zeit vom Austritt an bis zum Abriss des Flüssigkeitsstrahls gemessen als Auslaufzeit gemessen wird. Sämtliche Vorbereitung und Messungen werden bei einer Temperatur von 23 °C durchgeführt. Zunächst werden alle Komponenten des Beschichtungsstoffs vermischt und sofort die Auslaufzeit der Mischung gemessen (Start-Auslaufzeit). Die Messung wird in regelmäßigen Zeitabständen wiederholt. Das Ende der Topfzeit ist erreicht, wenn die Auslaufzeit das Doppelte der Startauslaufzeit aufweist.

Bestimmung der Trocknungszeit: Zur Bestimmung der Trocknungszeit wird ein Trocknungsrecorder, Trocknungszeitmessgerät der Firma BYK Gardener, eingesetzt. Hierbei wird der zu untersuchende Beschichtungsstoff mit Hilfe eines Filmziehers gleichmäßig auf Glasstreifen appliziert. Die Glasstreifen werden anschließend in einen linearen Recorder gelegt. Dann werden Nadeln auf die Beschichtung aufgesetzt und mit einer definierten, konstanten Geschwindigkeit über den trocknenden Film gezogen. Dabei entsteht ein charakteristisches Trocknungsbild der Beschichtung, in dem die einzelnen Zeitabschnitte die unterschiedlichen Härtungsstadien zeigen: Verlauf oder Offenzeit, Grundspur, Filmaufriss und Oberflächenspur. Die Aushärtung des Beschichtungsstoffs beginnt dabei mit dem Ende der Offenzeit, d.h. in dem Zeitpunkt, an dem die durch die Nadel in den applizierten Film geritzte Spur sichtbar bleibt. Sie endet mit der Oberflächenspur, d.h. in dem Zeitpunkt, an dem die Nadel keine sichtbar Spur mehr im applizierten Film hinterlässt.

Zur Beurteilung Lagerstabilität des Beschichtungsstoffs wurden auch die Eigenschaften der Beschichtungen, die aus unterschiedlich gelagerten Beschichtungsstoffen der Beispielrezeptur 2 hergestellt wurden, untersucht. Hierzu wurden Glanz und Bruchdehnung bestimmt. Es wurden jeweils Proben nach 1 Tag Lagerung bei 23 °C, nach 28 Tagen Lagerung bei 40 °C und nach 1 Jahr Lagerung bei 20 bis 23 °C zur Herstellung einer Beschichtung eingesetzt. Zur Herstellung der Probekörper wurde Beispielrezeptur 2 auf grundierte Aluminiumplatten mittels Becherpistole appliziert und bei Raumtemperatur ausgehärtet.

Bestimmung des Oberflächenglanzes: Der Glanz der Beschichtungsoberfläche wird als Reflektometerwert bestimmt. Der Reflektometerwert einer Probe ist definiert als das Verhältnis der von der Probenoberfläche und einer Glasoberfläche mit der Brechzahl 1,567 in Spiegelrichtung reflektierten Lichtströme. Die Messwerte werden mit Hilfe eines üblichen Reflektometers im Winkel 60° bestimmt.

Bestimmung der Bruchdehnung: Die Bruchdehnung wird über Dornbiegeversuch bestimmt. Dazu werden die Probekörper, um einen Dorn gebogen. Je kleiner der Radius des Dorns, um den die Platte ohne eine Beschädigung oder Bruch der Beschichtung gebogen werden kann, desto größer ist die Bruchdehnung der Beschichtung. Als Messwert wird der Durchmesser des Dorns angegeben.

**Tabelle: Lagerstabilität Beispielrezeptur 2**

| Lagerung | 1 Tag, 24°C | 28 Tage, 40°C | 1 Jahr, 20 - 23 °C |
|---|---|---|---|
| Topfzeit | 2,5 h | 2,5 h | 2,5 h |
| Offenzeit | 59 min | 60 min | 56 min |
| Ende Oberflächenspur | 136 min | 132 min | 128 min |
| Bruchdehnung | 12 mm | 12 mm | 12 mm |
| Glanz | 87 | 88 | 87 |

Wie die Tabelle zeigt, weisen die erfindungsgemäßen Beschichtungsstoffe eine hohe Lagerstabilitität auf. Nach einer längeren Lagerung bei erhöhter Temperatur zeigen die Beschichtungsstoffe selbst keine Verschlechterung ihrer Verarbeitbarkeit. Auch die daraus hergestellten Beschichtungen zeigen keine Beeinträchtigungen ihrer Eigenschaften.

## Patentansprüche

1. Beschichtungstoff zur Herstellung einer Beschichtung aufweisend zumindest
- 15 bis 70 Gew.-% ein oder mehrere CH-acide Verbindungen A, ausgewählt aus Verbindungen der Formel 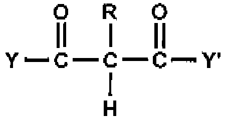 wobei
R Wasserstoff, ein Alkyl- oder Arylrest,
Y ein Alkyl-, Aralkyl-, Aryl-, Alkoxy-Rest oder eine Aminogruppe und,
Y' ein Alkyl-, Aralkyl-, Aryl-, Alkoxy-Rest oder eine Aminogruppe ist,
- 4 bis 40 Gew.-% ein oder mehrere vinyloge Carbonylverbindungen B aus gewählt aus Acrylaten und Maleaten,
- 0,1 bis 15 Gew.-% ein oder mehrere latent-basische Katalysatoren C,
- 0,00001 bis 10 Gew.-% ein oder mehrere Lichtschutzmittel, welche ausgewählt sind aus der Gruppe enthaltend Radikalfänger, UV-Absorber, Quencher und Peroxidzersetzer,
- 0,00001 bis 20 Gew.-% ein oder mehrere Offenzeit-Verlängerer, welche ausgewählt sind aus der Gruppe enthaltend basische NH-funktionelle Verbindungen mit pKa-Werten zwischen 4 und 14, und,
- 0,00001 bis 20 Gew.-% ein oder mehrere Topfzeit-Verlängerer, welche ausgewählt sind aus der Gruppe enthaltend Alkohole mit bis zu 6 Kohlenstoffatomen und Verdunstungszahlen unter 35 aufweisen.
jeweils bezogen auf die Gesamtmenge des Beschichtungsstoffs.

2. Beschichtungstoff nach Anspruch 1, **dadurch gekennzeichnet, dass** er weiterhin bis zu 70 Gew.-% ein oder mehrere anorganische und/oder organische Pigmente aufweist.

3. Beschichtungsstoff nach Anspruch 2, **dadurch gekennzeichnet, dass** die Pigmente ausgewählt sind aus der Gruppe enthaltend Titandioxid, Eisenoxide, Chromoxide, Chromtitanate, Bismutvanadat, Cobaltblau, Ruße, Pigment Yellow 151, Pigment Yellow 213, Pigment Yellow 83, Pigment Orange 67, Pigment Orange 62, Pigment Orange 36, Pigment Red 170, Pigment Violet 19, Pigment Violet 23, Pigment Blue 15:3, Pigment Blue 15:6 und Pigment Green 7.

4. Beschichtungsstoff nach einem der voranstehenden Ansprüche, **dadurch gekennzeichnet, dass** die Katalysatoren C substituierte Carbonsäuresalze der Formel 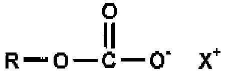 sind, worin
R Wasserstoff, Alkyl- oder Aralkyl- oder ein Polymer-Rest ist,
X⁺ ein Alkali- oder Erdalkalimetall-Kation, ein quaternäres Ammonium- oder Phosphoniumsalz der Formel (R')4Y⁺ ist,
worin
Y Stickstoff oder Phosphor ist,
R' gleich oder verschieden, Wasserstoff, Alkyl-, Aral- oder Aralkyl- oder ein Polymer ist
und worin R und R' eine Ringstruktur bilden oder ein Polymer sind.

5. Beschichtungsstoff nach einem der voranstehenden Ansprüche, **dadurch gekennzeichnet, dass** die Lichtschutzmittel substituierte 2,2,6,6-Tetramethylpiperidine, 2-Hydroxyphenylbenztriazole, 2-Hydroxybenzophenone, 2-Hydroxyphenyltriazine, Oxalanilide, organische Nickelverbindungen, Thioether oder/oder Phosphite sind.

6. Beschichtungsstoff nach einem der voranstehenden Ansprüche, **dadurch kennzeichnet, dass** der Beschichtungsstoff 0,5 bis 5, bevorzugt 1 bis 3 Gew.-% Lichtschutzmittel bezogen auf die Gesamtmenge des Beschichtungsstoffs aufweist.

7. Beschichtungsstoff nach einem der voranstehenden Ansprüche, **dadurch gekennzeichnet, dass** die Topfzeit-Verlängerer Alkohole mit bis zu 4 Kohlenstoffatomen sind.

8. Beschichtungsstoff nach einem der voranstehenden Ansprüche, **dadurch kennzeichnet, dass** der Beschichtungsstoff 0,01 bis 15, bevorzugt 0,1 bis 10 Gew.-% Topfzeit-Verlängerer bezogen auf die Gesamtmenge des Beschichtungsstoffs aufweist.

9. Beschichtungsstoff nach einem der voranstehenden Ansprüche, **dadurch gekennzeichnet, dass** die Offenzeit-Verlängerer Succinimide, 1,2,4,-Triazole, 1,2,3,-Benzotriazole, 5,5-Diphenylhydantoine, Hydantoine und/oder (RS)-3-Ethyl-3-methylpyrrolidin-2,5-dion sind.

10. Beschichtungsstoff nach einem der voranstehenden Ansprüche, **dadurch kennzeichnet, dass** der Beschichtungsstoff 0,01 bis 10, bevorzugt 0,1 bis 5 Gew.-% Offenzeit-Verlängerer bezogen auf die Gesamtmenge des Beschichtungsstoffs aufweist.

11. Beschichtungsstoff nach einem der voranstehen Ansprüche, **dadurch gekennzeichnet, dass** der Beschichtungsstoff weiterhin bis zu 25 Gew.-% ein oder mehrere Dispergieradditive aufweist.

12. Beschichtungsstoff nach einem der voranstehenden Ansprüche, **dadurch gekennzeichnet, dass** der Beschichtungsstoff weiterhin bis zu 60 Gew.-% ein oder mehrere funktionale Füllstoffe aufweist.

13. Beschichtungsstoff nach einem der voranstehenden Ansprüche, **dadurch gekennzeichnet, dass** der Beschichtungsstoff weiterhin bis zu 50 Gew.-% ein oder mehrere aprotische Lösemittel aufweist.

14. Verwendung des Beschichtungsstoffs nach einem der Ansprüche 1 bis 13 zur Herstellung zumindest einer Beschichtung in einem Beschichtungssystem.

15. Verwendung nach Anspruch 14 **dadurch gekennzeichnet, dass** zumindest ein Basislack hergestellt ist aus einem Beschichtungsstoff nach einem der Ansprüche 2 bis 13.

16. Verwendung nach Anspruch 14, **dadurch gekennzeichnet, dass** zumindest ein Klarlack hergestellt ist aus einem Beschichtungstoff nach einem der Ansprüche 1 und 4 bis 13.

17. Verfahren zur Beschichtung eines Bauteils aufweisend die Schritte (a) Applizieren eines Beschichtungsstoffs nach einem der Ansprüche 1 bis 13 auf ein Substrat und (b) Aushärten der applizierten Schicht bei Temperaturen zwischen 5 und 45 °C über einen Zeitraum von 1 bis 12 Stunden.

18. Verfahren nach Anspruch 17, **dadurch gekennzeichnet, dass** der Beschichtungsstoff in Schritt (a) mittels Sprühverfahren appliziert wird.

19. Bauteil beschichtet mit zumindest einer Beschichtung hergestellt aus einem Beschichtungsstoff nach einem der Ansprüche 1 bis 13.

20. Bauteil nach Anspruch 19, **dadurch gekennzeichnet, dass** das Bauteil ein Schienenfahrzeugbauteil oder Luftfahrzeugbauteil ist.

## Claims

1. Coating material for the production of a coating containing at least
- 15 to 70 % by weight of at least one CH-acidic compound A selected from compounds of the formula 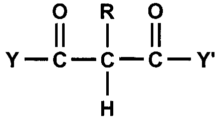 with
R being hydrogen, an alkyl group or aryl group,
Y being an alkyl group, aralkyl group, aryl group, alkoxy group or an amino group, and with
Y' being an alkyl group, aralkyl group, aryl group, alkoxy group or an amino group,
- 4 to 40 % by weight of at least one vinylogous carbonyl compound B selected from acrylates and maleates,
- 0.1 to 15 % by weight of at least one latent base catalyst C,
- 0.00001 to 10 % by weight of at least one light stabilizer selected from the group comprising free-radical scavengers, UV absorbers, quenching agents and peroxide decomposers,
- 0.00001 to 20 % by weight of at least one open-time extender selected from the group comprising basic NH functional compounds with a pKₐ value of between 4 and 14, and,
- 0.00001 to 20 % by weight of at least one pot life extender selected from the group comprising alcohols with up to 6 carbon atoms, and showing an evaporation number of below 35.
each based on the total quantity of the coating material.

2. Coating material as defined in claim 1, **characterized in that** it furthermore contains up to 70 % by weight of at least one inorganic and/or organic pigment.

3. Coating material as defined in claim 2, **characterized in that** the pigments are selected from the group comprising titanium dioxide, iron oxides, chromium oxides, chromium titanates, bismuth vanadate, cobalt blue, carbon blacks, pigment yellow 151, pigment yellow 213, pigment yellow 83, pigment orange 67, pigment orange 62, pigment orange 36, pigment red 170, pigment violet 19, pigment violet 23, pigment blue 15:3, pigment blue 15:6 and pigment green 7.

4. Coating material as defined in one of the preceding claims, **characterized in that** the catalysts C are substituted carboxylic acid salts of the formula 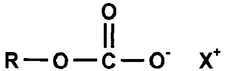 wherein
R is hydrogen, an alkyl group or aralkyl group or a polymer group,
X⁺ is an alkali metal cation, an alkaline earth metal cation or a quaternary ammonium salt or phosphonium salt of the formula (R')4Y⁺,
wherein
Y is nitrogen or phosphorus,
R' is the same or different, is hydrogen, an alkyl group, an aryl group or an aralkyl group or a polymer
and wherein R and R' form a ring structure or are a polymer.

5. Coating material as defined in one of the preceding claims, **characterized in that** the light stabilizers are substituted 2,2,6,6-tetramethylpiperidines, 2-hydroxyphenyl benzotriazoles, 2-hydroxybenzophenones, 2-hydroxyphenyltriazines, oxalanilides, organic nickel compounds, thioethers and/or phosphites.

6. Coating material as defined in one of the preceding claims, **characterized in that** the coating material contains 0.5 to 5 % by weight, preferably 1 to 3 % by weight, of light stabilizers, based on the total quantity of the coating material.

7. Coating material as defined in one of the preceding claims, **characterized in that** the pot-life extenders are alcohols with up to 4 carbon atoms.

8. Coating material as defined in one of the preceding claims, **characterized in that** the coating material contains 0.01 to 15 % by weight, preferably 0.1 to 10 % by weight, of pot-life extenders, based on the total quantity of the coating material.

9. Coating material as defined in one of the preceding claims, **characterized in that** the open-time extenders are succinimides, 1,2,4,-triazoles, 1,2,3,-benzotriazoles, 5,5-diphenylhydantoins, hydantoins and/or (RS)-3-ethyl-3-methylpyrrolidine-2,5-dione.

10. Coating material as defined in one of the preceding claims, **characterized in that** the coating material contains 0.01 to 10 % by weight, preferably 0,1 to 5 % by weight, of open-time extenders, based on the total quantity of the coating material.

11. Coating material as defined in one of the preceding claims, **characterized in that** the coating material furthermore contains up to 25 % by weight of at least one dispersing additive.

12. Coating material as defined in one of the preceding claims, **characterized in that** the coating material furthermore contains up to 60 % by weight of at least one functional filler.

13. Coating material as defined in one of the preceding claims, **characterized in that** the coating material furthermore contains up to 50 % by weight of at least one aprotic solvent.

14. Use of the coating material as defined in any one of claims 1 to 13 for the production of at least one coating in a coating system.

15. Use as defined in claim 14, **characterized in that** at least one base coat is produced from a coating material as defined in any one of claims 2 to 13.

16. Use as defined in claim 14, **characterized in that** at least one transparent lacquer is produced from a coating material as defined in any one of claims 1 and 4 to 13.

17. Method for coating a component, the method comprising the steps a) applying the coating material as defined in any one of claims 1 to 13 to a substrate and (b) curing the applied layer for a duration of 1 to 12 hours at a temperature of between 5 and 45 °C.

18. Method as defined in claim 17, **characterized in that** the coating material in step (a) is applied by means of a spraying method.

19. Component coated with at least one coating produced from a coating material as defined in any one of claims 1 to 13.

20. Component as defined in claim 19, **characterized in that** the component is a rail vehicle component or an aircraft component.

## Revendications

1. Matériau de revêtement pour la production d'un revêtement contenant au moins
- 15 à 70 % en poids d'un ou de plusieurs composés acides CH A étant choisis parmi les composés de la formule 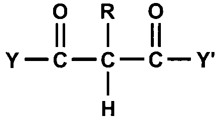 où
R représente l'hydrogène, un radical alkyle ou aryle,
Y représente un radical alkyle, aralkyle, aryle, alkoxy ou un groupe amino et,
Y' représente un radical alkyle, aralkyle, aryle, alkoxy ou un groupe amino,
- 4 à 40 % en poids d'un ou de plusieurs composés carbonyles vinylogues B étant choisis parmi les acrylates et les maléates,
- 0,1 à 15 % en poids d'un ou de plusieurs catalyseurs basiques latents C,
- 0,00001 à 10 % en poids d'un ou de plusieurs stabilisants lumière étant choisis dans le groupe comprenant les capteurs de radicaux libres, les absorbants de la lumière UV, les quenchers et les agents décomposant les peroxydes,
- 0,00001 à 20 % en poids d'un ou de plusieurs agents prolongeant le temps ouvert étant choisis dans le groupe comprenant les composés basiques à fonction NH ayant une valeur de pKₐ entre 4 et 14, et,
- 0,00001 à 20 % d'un ou de plusieurs agents prolongeant la durée de vie en pot étant choisis dans le groupe comprenant les alcools ayant jusqu'à 6 atomes de carbone et ayant un indice d'évaporation inférieur à 35, chaque quantité étant exprimée par rapport à la quantité totale du matériau de revêtement.

2. Matériau de revêtement selon la revendication 1, charactérisé en ce qu'il contient en outre jusqu'à 70 % en poids d'un ou de plusieurs pigments inorganiques et/ou pigments organiques.

3. Matériau de revêtement selon la revendication 2, charactérisé en ce que les pigments sont choisis dans le groupe comprenant le dioxyde de titane, les oxydes de fer, les oxydes de chrome, les titanates de chrome, le vanadate de bismuth, le bleu de cobalt, les noirs de carbone, le Pigment Yellow 151, le Pigment Yellow 213, le Pigment Yellow 83, le Pigment Orange 67, le Pigment Orange 62, le Pigment Orange 36, le Pigment Red 170, le Pigment Violet 19, le Pigment Violet 23, le Pigment Blue 15:3, le Pigment Blue 15:6 et le Pigment Green 7.

4. Matériau de revêtement selon l'une des revendications précédentes, charactérisé en ce que les catalyseurs C sont des sels d'acides carboxyliques substitués de la formule 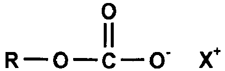 où
R représente l'hydrogène, un radical alkyle ou aralkyle ou un radical polymère,
X⁺ représente un cation de métal alcalin ou un cation de métal alcalino-terreux, un sel d'ammonium quaternaire ou un sel de phosphonium quaternaire de la formule (R')4Y⁺,
où
Y représente l'azote ou le phosphore,
R' est identique ou différent, est l'hydrogène, un radical alkyle, aryle ou aralkyle ou un polymère
et où R et R' forment une structure cyclique ou sont un polymère.

5. Matériau de revêtement selon l'une des revendications précédentes, charactérisé en ce que les stabilisants lumière sont des 2,2,6,6-tétraméthylpipéridines substituées, des 2-hydroxyphénylbenzotriazoles, des 2-hydroxybenzophénones, des 2-hydroxyphényltriazines, des oxalanilides, des composés de nickel organiques, des thioéthers et/ou des phosphites.

6. Matériau de revêtement selon l'une des revendications précédentes, charactérisé en ce que le matériau de revêtement contient 0,5 à 5 % en poids, de préférence 1 à 3 % en poids, de stabilisants de lumière, chaque quantité étant exprimée par rapport à la quantité totale du matériau de revêtement.

7. Matériau de revêtement selon l'une des revendications précédentes, charactérisé en ce que les agents prolongeant la durée de vie en pot sont des alcools ayant jusqu'à 4 atomes de carbone.

8. Matériau de revêtement selon l'une des revendications précédentes, charactérisé en ce que le matériau de revêtement contient 0,01 à 15 % en poids, de préférence 0,1 à 10 % en poids, d'agents prolongeant la durée de vie en pot, chaque quantité étant exprimée par rapport à la quantité totale du matériau de revêtement.

9. Matériau de revêtement selon l'une des revendications précédentes, charactérisé en ce que les agents prolongeant le temps ouvert sont des succinimides, des 1,2,4,-triazoles, des 1,2,3,-benzotriazoles, des 5,5-diphénylhydantoines, des hydantoines et/ou une(RS)-3-éthyl-3-méthylpyrrolidine-2,5-dione.

10. Matériau de revêtement selon l'une des revendications précédentes, charactérisé en ce que le matériau de revêtement contient 0,01 à 10 % en poids, de préférence 0,1 à 5 % en poids, d'agents prolongeant le temps ouvert, chaque quantité étant exprimée par rapport à la quantité totale du matériau de revêtement.

11. Matériau de revêtement selon l'une des revendications précédentes, charactérisé en ce que le matériau de revêtement contient en outre jusqu'à 25 % en poids d'un ou de plusieurs additifs de dispersion.

12. Matériau de revêtement selon l'une des revendications précédentes, charactérisé en ce que le matériau de revêtement contient en outre jusqu'à 60 % en poids d'un ou de plusieurs matières de charge fonctionnelles.

13. Matériau de revêtement selon l'une des revendications précédentes, charactérisé en ce que le matériau de revêtement contient en outre jusqu'à 50 % en poids d'un ou de plusieurs solvants aprotiques.

14. Utilisation du matériau de revêtement selon l'une quelconque des revendications 1 à 13 pour la production d'au moins un revêtement dans un système de revêtement.

15. Utilisation selon la revendication 14, charactérisée en ce qu'au moins une laque de base est produite d'un matériau de revêtement selon l'une quelconque des revendications 2 à 13.

16. Utilisation selon la revendication 14, charactérisée en ce qu'au moins une laque transparente est produite d'un matériau de revêtement selon l'une quelconque des revendications 1 et 4 à 13.

17. Procédé pour le revêtement d'un composant comprenant les étapes suivantes: (a) application d'un matériau de revêtement selon l'une quelconque des revendications 1 à 13 sur un substrat et (b) durcissement de la couche appliquée à une température comprise entre 5 et 45 °C pour une durée de 1 à 12 heures.

18. Procédé selon la revendication 17, charactérisé en ce que le matériau de revêtement est appliqué par procédé de pulvérisation dans l'étape (a).

19. Composant revêtu d'au moins un revêtement produit d'un matériau de revêtement selon l'une quelconque des revendications 1 à 13.

20. Composant selon la revendication 19, charactérisé en ce que le composant est un composant d'une véhicule sur rails ou un composant d'un aéronef.
